Europäisches Patentamt

(19) European Patent Office

Office européen des brevets

(11) Veröffentlichungsnummer: **0 106 200**
**B1**

(12) **EUROPÄISCHE PATENTSCHRIFT**

(45) Veröffentlichungstag der Patentschrift:
20.05.87

(51) Int. Cl.⁴: **H 05 B 37/02**

(21) Anmeldenummer: **83109345.5**

(22) Anmeldetag: **20.09.83**

(54) Vorrichtung zum automatischen Schalten und Regeln einer Raumbeleuchtung.

(30) Priorität: **23.09.82 DE 3235251**

(43) Veröffentlichungstag der Anmeldung:
**25.04.84 Patentblatt 84/17**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**GB-A-1 477 438**
**US-A-4 225 808**
**US-A-4 271 358**

(73) Patentinhaber: **Heimann GMBH, Weher Köppel 6, D-6200 Wiesbaden 1 (DE)**

(72) Erfinder: **Steinhage, Peter- Wilhelm, Dr., Dipl.-Phys., Brabanterstrasse 9, D-6200 Wiesbaden (DE)**

(74) Vertreter: **Mehl, Ernst, Dipl.- Ing., Postfach 22 01 76, D-8000 München 22 (DE)**

## Beschreibung

Die Erfindung betrifft eine Vorrichtung zum automatischen Schalten und Regeln einer Raumbeleuchtung gemäß dem Oberbegriff des Patentanspruches 1. Eine derartige Vorrichtung ist in der EP-A-0 O98 521 beschrieben, die unter Artikel 54(3) EPÜ fällt. Bei dieser, zum Stand der Technik gehörenden Vorrichtung werden Sichtbereiche des Detektors durch eine Fassettenoptik definiert.

Die Aufgabe, die der vorliegenden Erfindung zugrundeliegt, besteht in der Vereinfachung einer Vorrichtung gemäß dem Oberbegriff von Patentanspruch 1. Diese Aufgabe wird durch die kennzeichnenden Merkmale des Patentanspruches 1 gelöst.

Gemäß der Erfindung reicht es für viele Anwendungen aus, Sichtfelder durch Öffnungen in einem strahlungsundurchlässigen Raum abzugrenzen und zu definieren. Die Dimensionierung der Fenster oder Öffnungen richtet sich dabei zunächst nach der Größe des zu erfassenden Raumes. Vorteilhaft sind zwei oder mehrere Fenster oder Öffnungen im Gehäuse vorgesehen und so angeordnet und dimensioniert, daß voneinander durch Schattenbereiche getrennte Sichtbereiche entstehen und daß eine sich im Raum bewegende Person bei bestimmungsgemäßer Montage der Vorrichtung in nur einem Sichtgereich erscheinen und diesen wieder vollständig verlassen kann. Dabei wird zweckmäßig die durch die Bewegung gegenüber dem Sichtfeld hervorgerufene Änderung der Infrarot-Strahlungsintensität zum Ein- und Ausschalten ausgewertet. Dadurch kann die Beleuchtung auch in verschiedenen Bereichen des Raumes ein- bzw. ausgeschaltet werden.

Die Öffnungen sind zur Anpassung der Sichtfelder an die menschliche Gestalt vorteilhaft schlitzförmig ausgebildet. Dadurch wird beim Eintritt einer menschlichen Gestalt ein relativ großes Signal und ein großer Abstand zur übrigen im Raum vorhandenen Strahlung gleichzeitig erhalten. Eine gute Trennung in verschiedene Sichtfelder und eine einwandfreie Feststellung des Raumbereiches, in dem sich die Person gerade bewegt, ist erreichbar, indem die infrarot-undurchlassige Abdeckung zwischen zwei benachbarten Öffnungen oder Fenstern etwa die Breite der Offnungen bzw. Fenster in Richtung ihres geringsten gegenseitigen Abstandes besitzt. Bei dieser Ausführung kann ohne weiteres auch die Gesamtheit der Signale zur Bestimmung der Einschaltdauer herangezogen werden, da beim Durchlaufen mehrerer Sichtfelder ständig Intensitätsänderungen auftreten.

Eine vorteilhafte Strahlbegrenzung ergibt sich, indem die Öffnungen als Doppel- oder Mehrfachblenden oder Kanalblenden ausgebildet sind und indem diese Blenden in Richtung des Sichtfeldes hintereinander angeordnet sind. Dadurch werden insbesondere die unter einem großen hinkel zur Strahlmitte austretenden Randstrahlen einer nicht punktförmigen Lichtquelle absorbiert, die zur Strahlmitte zumindest annähernd parallelen aber durchgelassen, so daß sich ein relativ schmales Gesichtsfeld mit steilem Übergang zur angrenzenden Schattenzone ergibt.

Zur Messung der Lichtintensität ist im Gehäuse ein Lichtdetektor untergebracht. Dieser empfängt Strahlung aus allen Öffnungen und mißt somit einen mittleren Lichtwert. Ein Mittelwert über einen sehr großen Winkelbereich des Lichteinfalls wird erreicht, indem das Gehäuse aus einem Kunststoff besteht, welcher für sichtbares Licht durchlässig, für Infrarot-Strahlung aber undurchlässig ist.

Dies wird insbesondere dadurch erreicht, daß das Gehäuse aus einem weißeingefärbten Kunststoff besteht. Die üblicherweise eingesetzten Farben sind im Gegensatz zu vielen Kunststoffen für Infrarot-Strahlung nicht durchlässig, streuen aber Lichtstrahlung diffus, wodurch eine besonders gleichmäßige Messung des mittleren Lichtwertes möglich ist. Als Material eignen sich alle gängigen eingefärbten Kunststoffe, beispielsweise ABS.

Die vorliegende Erfindung eignet sich besonders gut für die Überwachung von relativ kleinen Raumen. Hierbei kann nicht nur der Aufwand gesenkt herden, sondern auch eine Anpassung an die speziellen Raumverhältnisse durch die Gestaltung der Öffnungen bzw. Fenster sehr einfach erfolgen.

Die Erfindung wird nun anhand von drei Figuren näher erläutert.

Figur 1 zeigt eine erfindungsgemäße Vorrichtung in Draufsicht.

Figur 2 zeigt die Ausführungsform von Figur 1 in geschnittener Ansicht.

Figur 3 zeigt eine zweite Ausführungsform In geschnittener Ansicht.

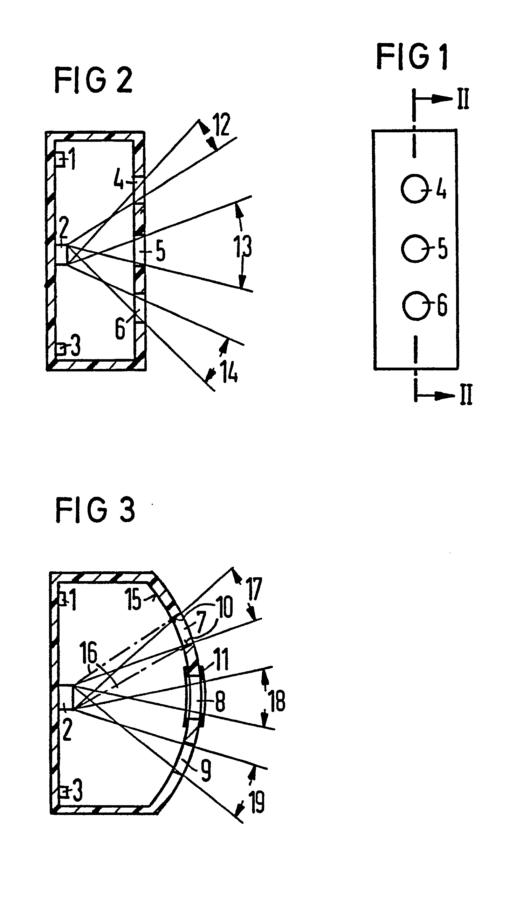

In einem Gehäuse sind gemäß den Figuren 1 und 2 Öffnungen 4 bis 6 angebracht. Diesen Öffnungen 4 bis 6 gegenüber sind ein Infrarot Detektor 2 und zwei Lichtdetektoren 1 und 3 angeordnet. Die Öffnungen 4 bis 6 begrenzen Sichtfelder 12 bis 14 mit unterschiedlichen Sichtwinkeln. Die Lichtsensoren 1 und 3 bekommen durch alle drei Öffnungen 4 bis 6 bzw. 7 bis 9 gleichzeitlg Lichtstrahlung, die aus verschiedenen Tellen des Raumes stammt. Sofern das Gehäuse aus einem lichtdurchlässigen, lichtstreuenden Kunststoff hergestellt ist, erhalten die Lichtdetektoren 1 und 3 eine aus allen Tellen des Taumes gemittelte Lichtintensität zur Meßsung. In diesem Fall kann auch mit Detektoren eine gemittelte Lichtdichte gemessen werden, die nur einen relativ geringen Lichteinfallswinkel erfassen. Ist dagegen das Gehäuse selbst für das Licht undurchlässig, so empfiehlt sich der Einsatz von allseitig lichtempfindlichen Detektoren, beispielsweise von Photowiderständen.

Das in Figur 3 dargestellte Ausführungsbeispiel heist eine gekrümmte Gehäuseoberfläche auf.

Die Öffnungen 7 und 9 heisen Begrenzungen 10 auf, deren gedachte Verlängerungen jeweils an eine Kante des Infrarot-Detektors 2 führen. Durch diese Ausführungsform werden die zumindest annähernd parallel zur Mittellinie des Sichtfeldes verlaufenden Strahlen aller Teile des Empfängers ungehindert durchlassen, die schrägen Randstrahlen aber absorbiert. Dadurch ergibt sich ein besonders steiler Übergang von einem Sichtfeld 17 bis 19 in einen Schattenbereich. Durch die Krümmung der gebogenen Gehäusewand 15 und die damit erreichte Anpassung des Abstandes der Öffnungen bzh. Fenster 7 bis 9 vom Infrarot-Empfänger 2 wird der Öffnungswinkel der einzelnen Sichtfelder 17 bis 19 gegenseitig und auf die Raumgegebenheiten abgestimmt.

Das Sichtfeld 18 ist durch zwei Blenden 11 begrenzt, welche in Richtung des Sichtfeldes 18 hintereinander angeordnet sind und deren Durchmesser dem gewünschten Öffnungswinkel des Sichtfeldes angepaßt sind. Diese Ausführungsform läßt die Herstellung von Öffnungen bzw. Fenstern 8 mit relativ großen Toleranzen zu. Außerdem ermöglicht sie die Anpassung der Sichtfelder 18 von bereits vorgefertigten erfindungsgemäßen Vorrichtungen an die jeweiligen Raumgegebenheiten.

## Patentansprüche

1. Vorrichtung zum automatischen Schalten und Regeln einer Raumbeleuchtung in Abhängigkeit von der Anwesenheit einer sich bewegenden Person bei zu geringer Beleuchtungsstärke, in der in der Nähe eines Infrarot-Detektors (2) ein Lichtsensor (1, 3) angeordnet ist und in der der Infrarot-Detektor (2) mit einer Steuerschaltung zum Ein- und Ausschalten und der Lichtsensor (1, 3) mit einer Steuerschaltung zur Regelung der Lichtleistung der Beleuchtung verschaltet ist, dadurch gekennzeichnet, daß der Infrarot-Detektor (2) in einem für die zu messende Infrarot-Strahlung undurchlässigen Gehäuse untergebracht ist, daß das Gehäuse zumindest ein für die Infrarot-Strahlung durchlässiges Fenster oder eine Öffnung (4, 5, 6 bzw. 7, 8, 9) enthält, wodurch sich für den Infrarot-Detektor zumindest ein Sichtbereich (12, 13, 14 bzw. 17, 18, 19) ergibt, den bei bestimmungsgemäßer Montage der Vorrichtung eine sich im Raum bewegende Person betreten und wieder verlassen kann und daß zumindest ein den Lichtsensor bildender Lichtdetektor (1, 3) in demselben Gehäuse untergebracht ist.

2. Vorrichtung nach Anspruch 1, dadurch gekennzeichnet, daß zwei oder mehrere Fenster oder Öffnungen (4, 5, 6: 7, 8, 9) im Gehäuse so angeordnet und dimensioniert sind, daß voneinander durch Schattenbereiche getrennte Sichtbereiche (12, 13, 14: 17, 18, 19) entstehen und daß eine sich im Raum bewegende Person bei bestimmungsgemäßer Montage der Vorrichtung in nur einem Sichtbereich erscheinen und diesen wieder vollständig verlassen kann.

3. Vorrichtung nach einem der Ansprüche 1 oder 2, dadurch gekennzeichnet, daß die Öffnungen (4, 5, 6; 7, 8, 9) zur Anpassung der Sichtfelder an die menschliche Gestalt schlitzförmig ausgebildet sind.

4. Vorrichtung nach einem der Ansprüche 1 bis 3, dadurch gekennzeichnet, daß die infrarotundurchlässige Abdeckung zwischen zwei benachbarten Öffnungen oder Fenstern etwa der Breite der Öffnungen bzw. Fenster in Richtung ihres geringsten gegenseitigen Abstandes entspricht.

5. Vorrichtung nach einem der Ansprüche 1 bis 4, dadurch gekennzeichnet, daß die Öffnungen als Doppel- oder Mehrfachblenden oder Kanalblenden ausgebildet sind und daß diese Blenden in Richtung des Gesichtsfeldes hintereinander angeordnet sind.

6. Vorrichtung nach einem der Ansprüche 1 bis 6, dadurch gekennzeichnet, daß das Gehäuse aus einem Stoff besteht, welcher für sichtbares Licht durchlässig, für Infrarot-Strahlung aber undurchlässig ist.

7. Vorrichtung nach Anspruch 6, dadurch gekennzeichnet, daß das Gehäuse aus einem weißeingefärbten Kunstoff besteht.

## Claims

1. Apparatus for the automatic switching and control of a room lighting in dependence upon the presence of a moving person at too low a lighting intensity, wherein a light sensor (1, 3) is arranged in the vicinity of an infrared detector (2) and wherein the infrared detector (2) is connected to a control circuit for switching on and off and the light sensor (1, 3) is connected to a control circuit for controlling the light output of the lighting, characterised in that the infrared detector (2) is accommodated in a housing which is impermeable to the infrared radiation to be measured; that the housing has at least one window or opening (4, 5, 6 or 7, 8, 9) which is permeable to the infrared radiation, whereby the infrared detector has at least one visibility region (12, 13, 14 or 17, 18, 19) which with a predetermined setting-up of the apparatus can be entered and left again by a person moving in the room; and that at least one light detector (1, 3) forming the light sensor is accommodated in the same housing.

2. Apparatus as claimed in Claim 1, characterised in that two or more windows or openings (4, 5, 6; 7, 8, 9) are arranged in the housing and so dimensioned that visibility regions (12, 13, 14; 17, 18, 19) are formed which are separated from one another by shadow regions; and that during the predetermined setting-up of the apparatus, a person moving in the room can appear in only one visual range and completely leave it again.

3. Apparatus as claimed in Claim 1 or Claim 2, characterised in that the openings (4, 5, 6; 7, 8, 9) are slit-shape in order to adapt the visibility to the human shape.

4. Apparatus as claimed in one of Claims 1 to 3, characterised in that the covering between two adjacent openings or windows which is impermeable to infrared light approximately corresponds in the direction of its smallest mutual distance, to the width of the openings or windows.

5. Apparatus as claimed in one of Claims 1 to 4, characterised in that the openings are formed as double or multiple apertures or channel apertures; and that the apertures are arranged one behind another in the direction of the visibility field.

6. Apparatus as claimed in one of Claims 1 to 5, characterised in that the housing is made of a material which is permeable to visible light but impermeable to infrared light.

7. Apparatus as claimed in Claim 6, characterised in that the housing consists of a white-coloured synthetic resin.


**Revendications**

1. Dispositif de commutation et de régulation automatiques de l'éclairage d'une pièce en fonction de la présence d'une personne se déplaçant, dans le cas d'une intensité trop faible d'éclairement, et dans lequel un capteur de lumière (1, 3) est disposé à proximité d'un détecteur à infrarouge (2) et dans lequel le détecteur à infrarouge (2) est raccordé à un circuit de commande de branchement et de débranchement, et le capteur de lumière (1, 3) est raccordé à un circuit de commande de réglage de la puissance lumineuse de l'éclairage, caractérisé par le fait que le détecteur à infrarouge (2) est logé dans un boîtier opaque pour le rayonnement infrarouge à mesurer, que le boîtier contient au moins une fenêtre transparente pour le rayonnement infrarouge ou une ouverture (4, 5, 6 ou 7, 8, 9), ce qui fournit pour le détecteur à infrarouge au moins une zone devision (12, 13, 14 ou 17, 18, 19), dans laquelle une personne en déplacement dans la pièce peut s'engager et qu'elle peut à nouveau quitter, lorsque le dispositif est monté d'une manière conforme aux prescriptions, et qu'au moins un détecteur de lumière (1, 3) constituant le capteur de lumière est logé dans le même boîtier.

2. Dispositif suivant la revendication 1, caractérisé par le fait que deux ou plusieurs fenêtres ou ouvertures (4, 5, 6; 7, 8, 9) sont disposées dans le boîtier et sont dimensionnées de telle sorte qu'il apparaît des zones de vision (12, 13, 14; 17, 18, 19) séparées les unes des autres par des zones d'ombre et qu'une personne se déplaçant dans la pièce peut apparaître dans seulement une zone de vision et peut à nouveau quitter complètement cette dernière, lorsque le dispositif est monté conformément à cette prescription.

3. Dispositif suivant l'une des revendications 1 ou 2, caractérisé par le fait que les ouvertures (4, 5, 6; 7, 8, 9) sont agencées sous la forme d'une fente de manière à permettre l'adaptation des zones de vision à la silhouette humaine.

4. Dispositif suivant l'une des revendications 1 à 3, caractérisé par le fait que le recouvrement, opaque au rayonnement infrarouge entre deux ouvertures ou fenêtres voisines correspond approximativement à la largeur des ouvertures ou des fenêtres dans la direction de leur écartement réciproque le plus faible.

5. Dispositif suivant l'une des revendications 1 à 4, caractérisé par le fait que les ouvertures sont réalisées sous la forme de diaphragmes doubles ou multiples ou de diaphragmes à fente et que ces diaphragmes sont disposés les uns derrière les autres dans la direction du champ de vision.

6. Dispositif suivant l'une des revendications 1 à 5, caractérisé par le fait que le boîtier est constitué en une matière qui est transparente pour la lumière visible, mais est opaque pour le rayonnement infrarouge.

7. Dispositif suivant la revendication 6, caractérisé par le fait que le boîtier est constitué en une matière plastique colorée en blanc.

0 106 200

FIG 2

FIG 1

FIG 3

1